# EUROPEAN PATENT APPLICATION

(11) **EP 1 607 322 A1**
(43) Date of publication of application: **21.12.2005**
(21) Application number: 04717118.6
(22) Date of filing: 04.03.2004
(51) Int. Cl.: B63C 7/16, B63C 7/00

(54) **HYDROSTATIC SYSTEM FOR EXTRACTING HYDROCARBONS AND OILS FROM THE TANKS OF A SUNKEN SHIP**

(30) Priority: 04.03.2003 ES 200300516
(71) Applicant: Bendito Saura, Mariano, 07300 Inca (ES); Bendito Vallori, Sebastian Enrique, 07300 Inca (ES)
(72) Inventor: Bendito Saura, Mariano, 07300 Inca (ES); Bendito Vallori, Sebastian Enrique, 07300 Inca (ES)
(86) International application number: PCT/ES2004/000102
(87) International publication number: WO 2004/078580

(57) **Abstract**

It concerns those elements that allow to do it in a controlled and safe way, taking advantage of their lesser density compared to the water surrounding them, and therefore their tendency to float, and to deposit them inside a bell (C), which has previously been allowed to descend along a cable guide (G) from the sea surface to the bottom, where the vessel is located (B). Emptying the tank into the bell (C) takes place through the automatic opening valve (V2), and then floats (C) due to the contribution of sufficient fuel oil towards the interior along the same cable (G) until the float (F) is detained. The bell (C) is emptied through the transfer valve (V2) into a container and the cycle described then starts again.

## Description

The present invention concerns those elements that allow controlled and safe extraction of hydrocarbons and oil from the tanks of a sunken vessel, taking advantage of their lesser density compared to the water surrounding them, and therefore their tendency to float, which increases efficiency and safety when undertaking the said task.

Preliminary investigation has not determined the existence of any mechanism similar to the one proposed in the present invention.

The present invention concerns the creation of a bell, whether rigid or flexible, that is sufficiently heavy to sink in sea water and which can hold the amount of fuel or oil that will allow the combination of the container and the content cited to be buoyant. The said bell penetrates the deck, and is fitted on its uppermost part with a valve called a transfer valve, that is activated at will and through which the whole content can be emptied into the aforementioned bell. In addition it is fitted with the necessary means to move along a cable guide that is installed and connects the sunken vessel to the buoy floating on the surface, the submarine end of which is firmly anchored near a valve called an unloading valve and previously connected to the tank that is to be emptied on the sunken vessel. It can be opened or closed by applying or removing the appropriate weight on a cam, fitted in the valve to that effect. As the surface end of the cable guide is attached to the said buoy, it is sufficiently tense to stay vertical over the unloading valve.

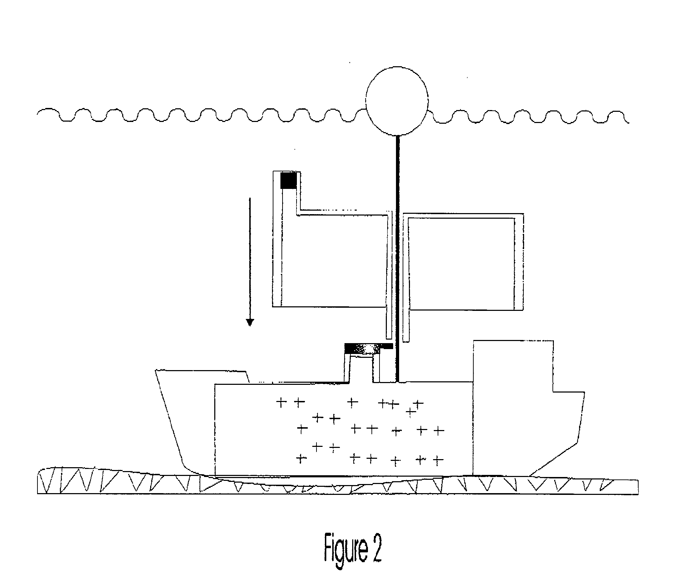

These and other features of the present invention can be understood more easily from the following description when going through a practical example of how it works. This description is based on the drawings in the attached appendix in which:

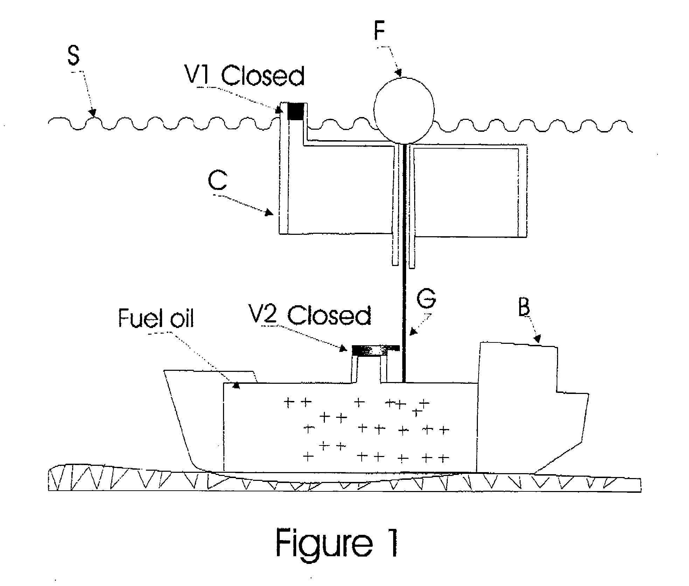

Figure 1 represents a section of a sunken oil tanker (B), lying on the seabed that has been fitted with an extractor system in which:
   - C.: Bell
   - G.: Cable guide
   - V1.: Transfer valve
   - V2.: Unloading valve
   - L.: Cam
   - F.: Float
   - S.: Sea water surface
Figure 2 represents the assembly while the bell (C) descends.

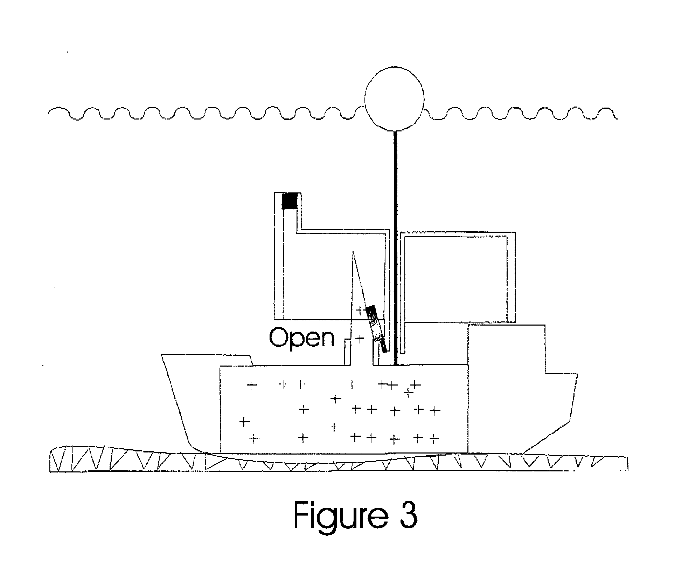

Figure 3 describes the opening of the valve (V2) due to the weight of the bell (C) applied to its cam (L) and the rising flow of the oil that tends to fill the bell (C).

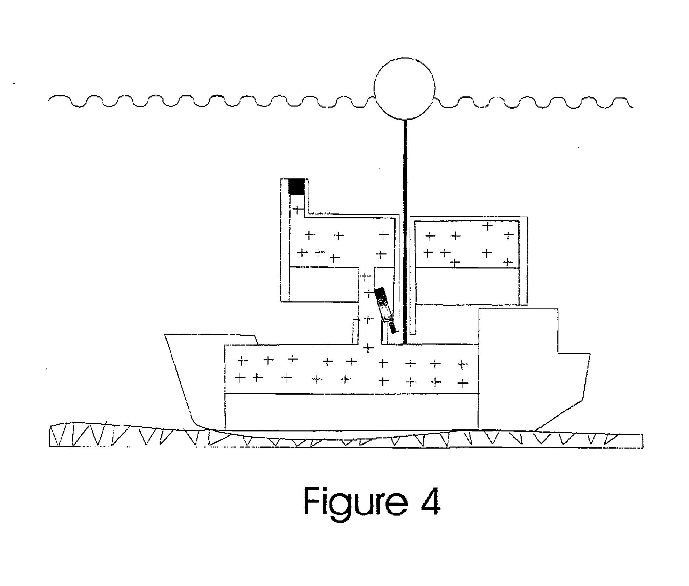

Figure 4 shows the same configuration with the bell (C) on its ascent.

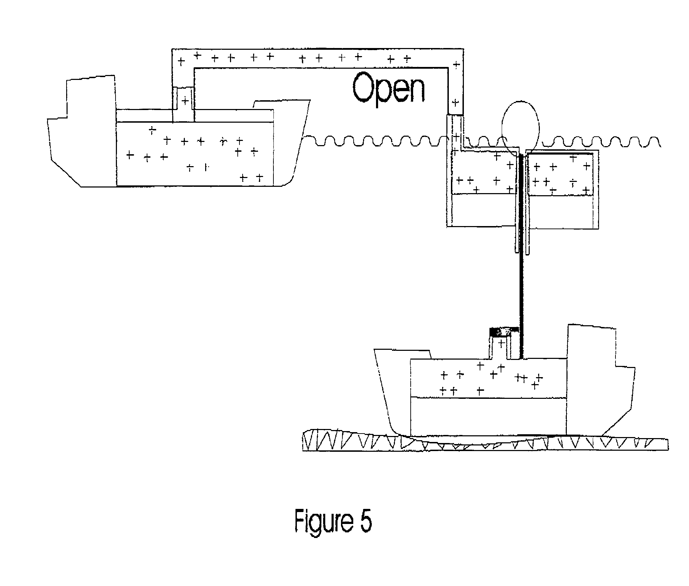

Figure 5 represents the bell (C), connected via the transfer valve (V1) to another oil tanker (P) that transferring into its holds the oil extracted from the bottom.

When the assembly is arranged like this, we can see an example of how it works when the bell (C) is allowed to fall freely along the cable guide (G); when it reaches the vessel on the seabed, it is correctly placed in the unloading valve (V2) which opens due to its own weight operating the cam (L) so that the tank content flows through it and is collected, floating against the bell ceiling. Once full (C), to the point that the buoyancy of the content surpasses the weight of the container and the assembly begins its ascent, the unloading valve (V2) closes due to lack of weight on the cam (L) operating it, and the assembly floats again towards the surface along the cable guide (G).

Once near the surface, the float (F) stops ascending at the specific depth so that the transfer valve (V1) emerges and the necessary means can be connected to it and the container into which the extracted material is finally emptied onboard the vessel (P).

Once installed, the aforementioned valve (V1) is opened and the transfer begins and, once concluded, the valve (V1) in question is closed and the bell (C) is allowed to descend again. The cycle is repeated until all the oil has been emptied from the vessel (B).

We do not believe it necessary to extend further on explaining this invention, as any expert in this subject can understand its scope and the advantages arising from it.

The terms upon which the present report has been written must always be taken in the widest possible and not limitative sense.

The materials, shape and disposition of the elements shall be susceptible to variation, whenever this does not entail altering the essential characteristics of the invention as claimed below.

## Claims

1. Hydrostatic system for extracting hydrocarbons and oil from the tanks of a sunken vessel that is **characterized** for its bell (C) with a transfer valve (V1) that, when penetrating the deck, and is capable of moving alternatively along a cable guide (G) that is fixed and extends from a float (F) located on the sea water surface (S) to an unloading valve (V2) correctly arranged so that extraction can be carried out from the vessel.

2. Hydrostatic system for extracting hydrocarbons and oil from the tanks of a sunken vessel that is **characterized** as per the above claim, because the bell (C) has sufficient weight to sink spontaneously when set free in the sea.

3. Hydrostatic system for extracting hydrocarbons and oil from the tanks of a sunken vessel that is **characterized**, as per the first claim, because the bell (C) has an internal volume such that it can house as much of the stated contents to be extracted as the assembly can displace to float.

4. Hydrostatic system for extracting hydrocarbons and oil from the tanks of a sunken vessel that is **characterized** as per the first claim, because the unloading valve (V2) has a cam (L) that opens when the bell (C) exerts its weight on it, allowing the contents to be extracted to flow through until, due to the absence of the bell (C) on the aforementioned cam (L), the valve (V2) is closed.

5. Hydrostatic system for extracting hydrocarbons and oil from the tanks of a sunken vessel that is **characterized** as per the first claim, because according to the first recovery, because the transfer valve (V1) opens and closes at will and can be connected, using specific means, to the cargo holds of another vessel (P) capable of transferring and later transporting the content of the bell (C).
